(19) Europäisches Patentamt
European Patent Office
Office européen des brevets

(11) EP 0 807 640 B2

(12) # NOUVEAU FASCICULE DE BREVET EUROPEEN

Après la procédure d'opposition

(45) Date de publication et mention de la décision concernant l'opposition:
**18.02.2009 Bulletin 2009/08**

(45) Mention de la délivrance du brevet:
**03.07.2002 Bulletin 2002/27**

(21) Numéro de dépôt: **97106251.8**

(22) Date de dépôt: **16.04.1997**

(51) Int Cl.:
***C08F 2/00*** *(2006.01)* ***C08F 4/34*** *(2006.01)*
***C08F 12/02*** *(2006.01)* ***C08F 36/02*** *(2006.01)*
***C08F 20/12*** *(2006.01)*

(54) **Polymérisation en présence d'un radical libre stable et d'un initiateur de radicaux libres**

Polymerisation in Anwesenheit eines stabilen freien Radikals und eines freien radikalischen Initiators

Polymerization in the presence of a stable free radical and free radical initiator

(84) Etats contractants désignés:
**AT BE DE ES FI FR GB IT NL SE**

(30) Priorité: **13.05.1996 FR 9605909**

(43) Date de publication de la demande:
**19.11.1997 Bulletin 1997/47**

(73) Titulaire: **ARKEMA FRANCE**
**92700 Colombes (FR)**

(72) Inventeurs:
- **Bertin, Denis**
  **76970 Motteville (FR)**
- **Nicol, Pascal**
  **64000 Pau (FR)**
- **Boutevin, Bernard**
  **34090 Montpellier (FR)**

(74) Mandataire: **Lhoste, Catherine et al**
**ARKEMA FRANCE**
**Département Propriété Industrielle**
**420, rue d'Estienne d'Orves**
**92705 Colombes Cedex (FR)**

(56) Documents cités:

**EP-A- 0 457 355**
**WO-A-94/11412**
**WO-A-95/26987**
**DE-A- 4 340 887**
**DE-A- 4 424 300**
**JP-A- 04 146 908**
**JP-A- 08 003 208**
**US-A- 3 914 339**
**US-A- 5 412 047**

- **Swern D., Organic Peroxides; Swern D., Ed.; Wiley, New-York, Vol. II, 1971, pages 870-871.**
- **Röhm GmbH, Darmstadt catalogue "Lieferprogramm Formmassen, 12-1989**

Remarques:

Le dossier contient des informations techniques présentées postérieurement au dépôt de la demande et ne figurant pas dans le présent fascicule.



Printed by Jouve, 75001 PARIS (FR)

## Description

L'invention concerne un procédé de polymérisation d'au moins un monomère polymérisable ou copolymérisable par voie radicalaire en présence d'un radical libre stable et d'un initiateur de polymérisation.

La présence d'un radical libre stable dans un milieu de polymérisation permet de contrôler la croissance des chaînes de polymère et d'aboutir généralement à un polymère à faible polymolécularité, voire voisine de l'unité comme cela est possible en polymérisation anionique. La présence du radical libre stable présente cependant l'inconvénient de ralentir considérablement la vitesse de réaction et de rendre difficile, voire impossible, l'obtention de polymères à forte masse moléculaire moyenne en poids, par exemple supérieure à 50 000. On peut tenter de remédier à cet inconvénient en ajoutant à la polymérisation un initiateur de polymérisation. Cependant, les initiateurs jusqu'ici utilisés dans les milieux comprenant un monomère polymérisable et un radical libre stable étaient à l'origine de réactions secondaires se traduisant par la destruction partielle du radical libre stable et de l'initiateur lui-même et, par la formation d'impuretés dégradant notablement l'aspect du polymère final. Du fait de ces réactions secondaires, l'initiateur était peu efficace, allongeant les durées de réaction et rendant difficile l'obtention de polymères de forte masse moléculaire. De plus, le polymère final était coloré et souvent opaque.

Le document WO 94/11412 décrit un procédé de polymérisation en présence d'un radical libre stable et de peroxyde de benzoyle en tant qu'initiateur de polymérisation. Les polymères ainsi obtenus présentent une masse moléculaire moyenne en nombre inférieure à 60 000 et une masse moléculaire moyenne en poids inférieure à 70 000, et présentent de plus un indice de jaune élevé.

Le brevet US 4,581,429 décrit un procédé de polymérisation conférant un contrôle de la formation des chaînes de polymère en croissance. Ce procédé nécessite la préparation d'une alkoxyamine et mène à des oligomères de masse moléculaire inférieure à 10 000. Ce procédé présente de faibles degrés de conversion de monomère en polymère.

Les références suivantes peuvent également présenter un intérêt : WO 95/26987, US 5,412,047, US 5,449,724, BR 9400671.

Dans les documents de l'art antérieur, l'initiateur de polymérisation n'est jamais considéré comme étant un facteur essentiel, et c'est là une des originalités du procédé selon l'invention.

Il a maintenant été trouvé que l'usage d'une famille particulière d'initiateurs de polymérisation permettait de palier aux inconvénients ci-dessus mentionnés. Le procédé selon l'invention est rapide, permet à l'initiateur de jouer son rôle de façon plus efficace, et mène à des polymères ou copolymères présentant un faible indice de jaune selon la norme ASTM D 1925.

L'invention concerne un procédé de fabrication d'un polymère ou copolymère présentant un indice de jaune mesuré selon la norme ASTM D1925 inférieur à 20, comprenant une étape de polymérisation ou copolymérisation en phase organique, en l'absence de phase aqueuse, par voie radicalaire d'au moins un monomère en présence d'un radical libre stable qui comprend le groupement $=NO^{\bullet}$ et d'un initiateur de formule

$$R^1 — O — O — R^2$$

dans laquelle $R^1$ et $R^2$, pouvant être identiques ou différents, représentent un radical alkyle, aryle, alkylaryle, aralkyle comprenant par exemple de 1 à 20 atomes de carbone au moins un radical parmi $R^1$ et $R^2$ comprenant un noyau aromatique.

De préférence, l'initiateur présente une durée de demi-vie de une heure à une température comprise entre 80° C et 150° C et de manière encore préférée comprise entre 100° C et 130° C.

A titre d'exemple d'initiateur, on peut citer :

- le tert-butylcumylperoxyde,
- le peroxyde de dicumyle.

Le peroxyde de dicumyle est un initiateur particulièrement adapté.

L'initiateur peut être introduit dans le milieu de polymérisation ou copolymérisation à raison de 50 à 50 000 ppm en poids sur la base de la masse de monomère polymérisable ou copolymérisable.

Il ne faut pas confondre un radical libre stable avec les radicaux libres dont la durée de vie est éphémère (quelques millisecondes) comme les radicaux libres issus des amorceurs habituels de polymérisation comme les peroxydes, hydroperoxydes et amorceurs de type azo. Les radicaux libres amorceurs de polymérisation tendent à accélérer la polymérisation. Au contraire, les radicaux libres stables tendent généralement à ralentir la polymérisation. On peut généralement dire qu'un radical libre est stable au sens de la présente invention s'il n'est pas amorceur de polymérisation et si, dans les conditions d'utilisation de la présente invention, la durée moyenne de vie du radical est d'au moins cinq minutes. Au cours de cette durée moyenne de vie, les molécules du radical libre stable alternent en permanence l'état de radical et l'état de groupement lié par une liaison covalente à une chaîne de polymère. Bien entendu, il est préférable

que le radical libre stable présente une bonne stabilité pendant toute la durée de son utilisation dans le cadre de la présente invention. Généralement, un radical libre stable peut être isolé à l'état de radical à la température ambiante.

La famille des radicaux libres stables inclut les composés agissant comme inhibiteurs de polymérisation radicalaire, les radicaux nitroxydes stables c'est-à-dire comprenant le groupement =N-O• tels que les radicaux représentés par les formules suivantes :

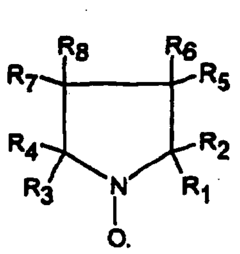 ,
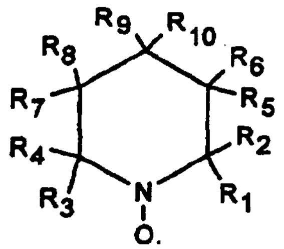 ,
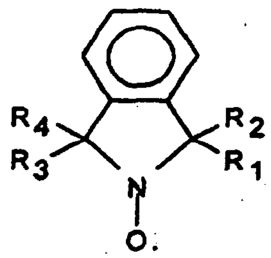 ,

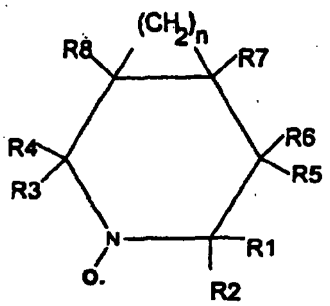 ,
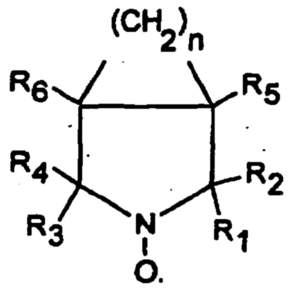 ,
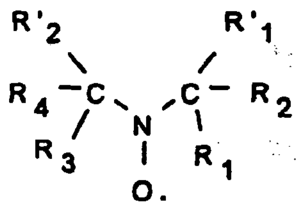 ,

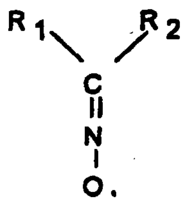 ,

dans lesquelles R1, R2, R3, R4, R'1 et R'2 pouvant être identiques ou différents représentent un atome d'halogène tel que le chlore, le brome ou l'iode, un groupement hydrocarboné linéaire, ramifié ou cyclique, saturé ou insaturé tels qu'un radical alkyle ou phényle, ou un groupement ester - COOR ou un groupement alcoxyle -OR, ou un groupement phosphonate - $PO(OR)_2$, ou une chaîne de polymère pouvant par exemple être un chaîne de polyméthacrylate de méthyle, de polybutadiène, de polyoléfine comme de polyéthylène ou de polypropylène, mais étant de préférence une chaîne de polystyrène, et dans lesquelles R5, R6, R7, R8, R9 et R10, pouvant être identiques ou différents, peuvent être choisis dans la même famille de groupements que celle qui vient d'être envisagée pour R1, R2, R3, R4, R'1 et R'2, et de plus peuvent représenter un atome d'hydrogène, un groupement hydroxyle -OH, un groupement acide tel que -COOH ou $-PO(OH)_2$ ou $-SO_3H$.

En particulier, le radical libre stable peut être le 2,2,5,5-tétraméthyl-1-pyrrolidinyloxy commercialisé sous la marque PROXYL ou le 2,2,6,6-tétraméthyl-1-piperidinyloxy, généralement commercialisé sous la dénomination TEMPO.

Le radical libre stable peut également être choisi dans la liste suivante :

- N-tertiobutyl-1-phényl-2 méthyl propyl nitroxyde,
- N-tertiobutyl-1-(2-naphtyl)-2-méthyl propyl nitroxyde,
- N-tertiobutyl-1-diéthylphosphono-2,2-diméthyl propyl nitroxyde,
- N-tertiobutyl-1-dibenzylphosphono-2,2-diméthyl propyl nitroxyde,
- N-phényl-1-diéthyl phosphono-2,2-diméthyl propyl nitroxyde,

- N-phényl-1-diéthyl phosphono-1-méthyl éthyl nitroxyde,
- N-(1-phényl 2-méthyl propyl)-1-diéthylphosphono-1-méthyl éthyl nitroxyde.

Le radical libre stable peut être introduit dans le milieu de polymérisation ou copolymérisation à raison de 0,005 % à 5 % en poids de la somme de la masse de monomère polymérisable et de radical libre stable.
De préférence, le rapport molaire du radical libre stable sur l'initiateur est compris entre 1,5 et 2,5 et de manière encore préférée voisin de 2.
Dans le cadre de la présente invention, tout monomère présentant une double liaison carbone-carbone susceptible de polymériser ou copolymériser par voie radicalaire, peut être utilisé.
Au moins un monomère présent dans le milieu de polymérisation ou copolymérisation peut être un monomère vinylaromatique ou une oléfine ou un diène ou un monomère acrylique ou méthacrylique. Le monomère peut également être le difluorure de vinylidène ou le chlorure de vinyle.
Par monomère vinylaromatique, on entend le styrène, le styrène substitué sur le groupement vinyle par un groupement alkyle tel que l'alphaméthylstyrène ou l'ortho-vinyltoluène, le para-vinyltoluène, l'ortho-éthylstyrène, le 2,4-diméthylstyrène, le styrène substitué sur le cycle par un halogène comme par exemple le 2,4-dichlorostyrène ainsi que le vinylanthracène, le chlorométhylstyrène, le para-acétoxystyrène.
Par diène, on entend en particulier un diène conjugué comprenant de 4 à 8 atomes de carbone tel que le 1,3-butadiène, l'isoprène, le 2,3-diméthyl1,3-butadiène, le pipérylène, le chloroprène.
Le procédé selon l'invention est plus particulièrement efficace dans le cas des monomères vinylaromatiques et des diènes.
Hormis les particularités de la présente invention pour ce qui concerne l'initiateur et le radical libre stable, la polymérisation ou copolymérisation est réalisée dans les conditions habituelles connues de l'homme du métier compte tenu du ou des monomères considérés, du moment que cette polymérisation ou copolymérisation intervient par un mécanisme radicalaire.
Dans le cas où le milieu comprend un monomère vinylaromatique et que l'on souhaite un excellent contrôle de la croissance du polymère ou copolymère de façon à ce que ce dernier soit de polymolécularité particulièrement étroite, il est préférable de mener la polymérisation ou copolymérisation à une température à laquelle aucune polymérisation ou copolymérisation n'est observée en l'absence de l'initiateur. Par exemple, dans le cas de la polymérisation ou copolymérisation d'au moins un monomère vinylaromatique, on est dans cette situation lorsque la température est inférieure à environ 120° C. Des vitesses appréciables de polymérisation ou copolymérisation sont néanmoins obtenues par le procédé de l'invention lorsque la température est comprise entre 90° C et 120° C.
Néanmoins, si l'on accepte une polymolécularité plus élevée, il n'est pas exclu de chauffer le milieu à de plus fortes températures.
Ainsi, dans le cas où le milieu comprend un monomère vinylaromatique, il est possible de réaliser la polymérisation ou copolymérisation entre 50° C et 120° C mais on peut également, chauffer jusqu'à 200° C, si l'on préfère une plus grande vitesse de polymérisation au détriment de la polymolécularité.
Le procédé selon l'invention peut être mené entre 50 et 200° C et de préférence entre 100 et 130° C.
Le milieu de polymérisation ou copolymérisation peut être destiné à mener à un polymère vinylaromatique choc, auquel cas il comprend généralement au moins un monomère vinylaromatique et un caoutchouc, ce dernier étant généralement un polydiène conjugué tel qu'un ou plusieurs polybutadiènes.
L'invention concerne également la préparation de copolymères. Par exemple, lorsqu'au moins un monomère vinylaromatique est présent dans le milieu, on peut copolymériser ce monomère avec, par exemple, au moins un monomère choisi parmi l'acrylonitrile, le méthacrylonitrile, l'acide acrylique, l'acide méthacrylique, un ester d'alkyle dont le groupement alkyle contient de 1 à 4 atomes de carbone, un N-alkylmaléimide dont le groupement alkyle contient de 1 à 4 atomes de carbone, le N-phénylmaléimide.
Le procédé selon l'invention permet la préparation de copolymères à blocs. En effet, la polymérisation d'un premier monomère en présence d'un radical libre stable mène à un bloc de polymère vivant. Il est alors possible d'accoler à ce premier bloc un bloc d'un autre polymère en plaçant le premier bloc de polymère vivant dans un milieu de polymérisation d'un second monomère. Il est ainsi possible de réaliser des copolymères à blocs, par exemple, des copolymères comprenant un ou plusieurs blocs de polystyrène et un ou plusieurs blocs de polybutadiène. La réalisation de tels copolymères par voie radicalaire nécessite un bon contrôle de la polymérisation de chacun des blocs. En effet, si une réaction de terminaison vient interrompre la croissance par polymérisation d'un bloc, il ne sera pas possible de lui accoler un bloc d'un autre monomère. Les réactions de terminaison doivent donc être les moins fréquentes possible. Il y a moins de réactions de terminaisons lorsqu'au cours de la polymérisation, la masse moléculaire moyenne en nombre est mieux linéairement proportionnelle au pourcentage de conversion. L'existence de réactions de terminaison se traduit par une diminution de la vitesse d'augmentation de la masse moléculaire moyenne en nombre en fonction du pourcentage de conversion.
Le procédé selon l'invention concerne les polymérisations ou copolymérisations en phase organique, en l'absence de phase aqueuse, comme c'est le cas dans les procédés en masse ou en solution dans un solvant organique.

Bien entendu, suivant les conditions de polymérisation ou copolymérisation, et en particulier la durée, la température, le degré de conversion de monomère en polymère ou copolymère, il est possible de réaliser des produits de masse moléculaire très différente.

L'invention concerne à la fois la préparation d'oligomères, polymères ou copolymères de masse moléculaire moyenne en poids inférieure à 10 000, que celle de polymères ou copolymères de masse moléculaire moyenne en poids supérieure à 10 000, comme les hauts-polymères de masse moléculaire moyenne en poids allant généralement de 100 000 à 400 000.

L'invention concerne à la fois les procédés de polymérisation ou copolymérisation dont le taux de conversion de monomère en polymère ou copolymère est inférieur à 50 % que ceux dont le taux de conversion de monomère en polymère ou copolymère est supérieur à 50 %. Par exemple, le taux de conversion de monomère en polymère ou copolymère peut dépasser 60 %, et va généralement de 65 % à 80 %.

Le procédé selon l'invention mène à un polymère ou copolymère (ce qui inclut les oligomères) à la polymolécularité généralement inférieure à 1,9 et à l'indice de jaune mesuré selon la norme ASTM D 1925 inférieur à 20, voire 10 et même 5.

Lorsque le rapport molaire de la quantité de radical libre stable sur la quantité de monomère est supérieur à 1,2, la polymolécularité du polymère ou copolymère final est généralement inférieure à 1,5.

Les caractéristiques suivantes ont été utilisées pour les exemples :

- % de conversion : % de monomère converti en polymère. Il a été déterminé par RMN $^{1}H$ sur un appareil Bruker 200 MHz avec intégration des pics correspondant au polymère et au monomère.
- Masse moléculaire moyenne en nombre (représenté par Mn) : Chromatographie à perméation de gel dans le THF à 30° C, après étalonnage avec des échantillons standarts de polystyrène.
- Indice de polymolécularité (représenté par Ip) : rapport de la masse moléculaire moyenne en poids sur la masse moléculaire moyenne en nombre, toutes deux mesurées par GPC (voir Mn ci-dessus).
- Efficacité : L'"efficacité" est égale au rapport de la masse moléculaire moyenne en nombre théorique sur la masse moléculaire moyenne en nombre expérimentale. La masse moléculaire moyenne en nombre théorique est donnée par la formule :

$$Mn_{th} = \frac{(M)_o - (M)}{2[(I)_o - (I)]}$$

dans laquelle (M), $(M)_o$, (I) et $(I)_o$ représentent respectivement les concentrations molaires (en mole par litre) en monomère, monomère à l'origine, initiateur, initiateur à l'origine.

La concentration (I) en fonction du temps (t) est déterminée par l'équation :

$$(I) = (I)_o\, e^{-Kd.t}$$

dans laquelle Kd représente la constante de vitesse de décomposition de l'initiateur à la température considérée.

Plus l'efficacité se rapproche de la valeur 1, plus l'initiateur et le radical libre stable jouent efficacement leur rôle sur la maîtrise de la polymérisation et participent peu aux réactions secondaires indésirables les détruisant partiellement.

**EXEMPLES 1 A 7**

On purge par des cycles vide-azote un réacteur bicol de 100 ml muni d'un système d'agitation et d'une régulation de température, puis l'on introduit dans le réacteur sous azote et à la température ambiante :

- 50 g de styrène (0,481 mole), puis
- une quantité d'initiateur telle que le rapport molaire de l'initiateur sur le styrène soit égal à $C_{Initiateur}$ dont la valeur est indiquée en haut des tableaux 1 à 7 ($C_{Dicum}$ lorsque l'initiateur utilisé est le peroxyde de dicumyle, $C_{Benz}$ lorsque l'initiateur utilisé est le peroxyde de benzoyle).
- une quantité de 2,2,6,6 tétraméthylpiperidinyloxy (communément appelé TEMPO) telle que le rapport molaire du

Tempo sur l'initiateur soit de 2.

On porte alors le réacteur à 125° C sous agitation jusqu'à la prise en masse du milieu réactionnel. L'instant pour lequel le mélange atteint la température de 125° C est défini comme étant l'instant de départ de l'essai.

Le polymère est ensuite refroidi à la température ambiante, puis solubilisé dans 10 fois son poids de tétrahydrofuranne (THF). Le polymère est alors précipité en versant au goutte à goutte la solution dans le THF obtenue dans 10 fois son volume de méthanol. Le polystyrène recueilli est analysé par chromatographie à perméation de gel (GPC). Les tableaux 1 à 7 rassemblent les résultats.

Ces derniers montrent l'évolution de la formation du polymère en fonction du temps.

**EXEMPLE 8**

Après purge par des cycles vide-azote, on introduit dans un réacteur en verre de 1 litre équipé d'un agitateur à ancre et d'une régulation de température, à 20° C et sous azote, 300 g de styrène, 4,5 millimole de peroxyde de dicumyle, 15 millimoles de radical libre stable TEMPO. L'ensemble est porté à 125° C. L'instant pour lequel le mélange atteint la température de 125° C est défini comme étant l'instant de départ de l'essai. Des prélèvements sont effectués au cours du temps pour analyse. Le tableau 8 rassemble les résultats concernant le suivi de la i formation du polymère au cours du temps.

Le polymère obtenu après 5 heures et 30 min de polymérisation est ensuité dégazé à l'étuve sous un vide de pression résiduelle de 25 mbar pendant 20 minutes à 200° C : il est ensuite mis en forme de plaque de 3 mm d'épaisseur dans une presse durant 10 minutes comprenant 5 minutes de préchauffage de la température ambiante jusqu'à 170° C, puis 5 minutes de pressage à 170° C sous 200 bars. On effectue alors une mesure d'indice de jaune sur la plaque, selon la norme ASTM D 1925. L'indice de jaune est de 2.

**EXEMPLE 9 (comparatif)**

On procède comme pour l'exemple 8, sauf que le peroxyde de dicumyle est remplacé par la même quantité de peroxyde de benzoyle. Le tableau 9 rassemble les résultats relatifs au suivi de la formation du polymère au cours du temps. L'indice de jaune est ici de 34,9.

TABLEAU 1

| **EXEMPLE 1 ; $C_{DICUM}$ = 0,02** | | | | |
|---|---|---|---|---|
| **Temps (h)** | **% conversion** | **Mn mesuré** | **Ip** | **Efficacité** |
| 1 | 2 | 300 | 1,05 | |
| 5 | 4 | 300 | 1,05 | |
| 10 | 5 | 300 | 1,05 | |
| 12 | 5 | 300 | 1,05 | |
| 15 | 7 | 300 | 1,05 | |
| 16 | 10 | 300 | 1,05 | |
| 17 | 25 | 650 | 1,07 | |
| 18 | 35 | 700 | 1,09 | 1,1 |
| 19 | 45 | 960 | 1,12 | 1,1 |
| 20 | 50 | 1050 | 1,12 | 1,1 |
| 21 | 55 | 1100 | 1,13 | |
| 22 | 60 | 1200 | 1,13 | 1,1 |
| 23,75 | 60 | 1300 | 1,14 | 1 |
| 26 | 60 | 1400 | 1,15 | 1 |

TABLEAU 2

| EXEMPLE 2 (COMPARATIF) ; $C_{BENZ}$ = 0,02 | | | | |
|---|---|---|---|---|
| **Temps (h)** | **% conversion** | **Mn mesuré** | **Ip** | **Efficacité** |
| 3,5 | 7,4 | - | - | |
| 5 | 8 | - | - | |
| 9 | 9 | - | - | |
| 14 | 12,5 | - | - | |
| 18 | 16,4 | 560 | 1,11 | |
| 22 | 20 | - | - | |
| 27 | 28 | 1500 | 1,11 | 0,5 |
| 32 | 32 | - | | |
| 38 | 37 | 1750 | 1,15 | 0,5 |
| 44 | 42 | 2200 | 1,16 | 0,5 |
| 51 | 45 | 2200 | - | |
| 58 | 47 | 2200 | 1,22 | 0,5 |
| 65 | 49 | 2200 | 1,32 | 0,5 |
| 74 | 50 | 2200 | 1,32 | 0,6 |

TABLEAU 3

| EXEMPLE 3 ; $C_{DICUM}$ = 0,01 | | | | |
|---|---|---|---|---|
| **Temps (h)** | **% conversion** | **Mn mesuré** | **Ip** | **Efficacité** |
| 1 | 2 | 300 | 1,00 | |
| 3 | 2,5 | 300 | 1,00 | |
| 5 | 3 | 300 | 1,00 | |
| 7 | 4 | 300 | 1,00 | |
| 9 | 6 | 300 | 1,00 | |
| 10 | 8 | 300 | 1,00 | |
| 11 | 9 | 300 | 1,00 | |
| 12 | 10 | 300 | 1,00 | |
| 13 | 11 | 300 | 1,00 | |
| 14 | 12 | 300 | 1,00 | |
| 15 | 13 | 300 | 1,00 | |
| 16 | 15 | 450 | 1,05 | |
| 17 | 50 | 2200 | 1,3 | 1,1 |
| 18 | 78 | 3600 | 1,26 | 1,1 |
| 18,5 | 90,5 | 4200 | 1,23 | 1,1 |

TABLEAU 4

| EXEMPLE 4 (COMPARATIF) ; $C_{Benz}$ = 0,01 | | | | |
|---|---|---|---|---|
| **Temps (h)** | **% conversion** | **Mn mesuré** | **Ip** | **Efficacité** |
| 3,5 | 3 | - | - | |
| 5 | 5 | - | - | |
| 11 | 12 | 450 | 1,07 | |
| 21 | 24 | 2200 | 1,14 | 0,6 |
| 24 | 31 | 2600 | 1,16 | 0,6 |
| 28 | 37 | 2700 | 1,27 | 0,7 |
| 31 | 43 | 3100 | 1,22 | |
| 34 | 44 | 3350 | 1,15 | 0,7 |
| 37 | 47 | 3600 | 1,20 | 0,7 |
| 42 | 57 | 4200 | 1,20 | 0,7 |
| 47 | 63 | | - | |
| 51 | 67 | 4300 | 1,23 | 0,8 |
| 55 | 78 | 4650 | 1,23 | 0,9 |
| 61 | 90 | 5000 | 1,23 | 1 |

TABLEAU 5

| EXEMPLE 5 ; $C_{Dicum}$ = 0,00125 | | | | |
|---|---|---|---|---|
| **Temps (h)** | **% conversion** | **Mn mesuré** | **Ip** | **Efficacité** |
| 4 | 1,5 | 300 | 1,00 | |
| 6 | 2,5 | 300 | 1,00 | |
| 10 | 38 | 12600 | 1,4 | |
| 11 | 54 | 16700 | 1,4 | |
| 11,75 | 68 | 21800 | 1,4 | |
| 13 | 81 | 29000 | 1,34 | 1,1 |

TABLEAU 6

| EXEMPLE 6 ; $C_{Dicum}$ = 0,0005 | | | | |
|---|---|---|---|---|
| **Temps (h)** | **% conversion** | **Mn mesuré** | **Ip** | **Efficacité** |
| 3 | 1,5 | 300 | | |
| 4 | 2 | 300 | | |
| 5 | 7,5 | 11000 | 1,7 | 0,7 |
| 6 | 22 | 21200 | 1,71 | 1 |
| 7 | 31 | 30000 | 1,63 | 1 |
| 8 | 41 | 39400 | 1,57 | 1 |
| 9 | 50,8 | 47000 | 1,54 | 1 |
| 10 | 60 | 54000 | 1,56 | 1,1 |

(suite)

| EXEMPLE 6 ; $C_{Dicum}$ = 0,0005 | | | | |
|---|---|---|---|---|
| **Temps (h)** | **% conversion** | **Mn mesuré** | **Ip** | **Efficacité** |
| 11 | 71 | 66000 | 1,53 | 1,1 |

TABLEAU 7

| EXEMPLE 7 ; $C_{DICUM}$ = 0,000166 | | | |
|---|---|---|---|
| **Temps (h)** | **% conversion** | **Mn mesuré** | **Ip** |
| 1 | 1 | 300 | |
| 3 | 9 | 33 600 | 1,8 |
| 4 | 25 | 66 000 | 1,6 |
| 5 | 40 | 76 600 | 1,6 |
| 6,5 | 63 | 104 000 | 1,6 |

TABLEAU 8

| EXEMPLE 8 ; $C_{Dicum}$ = 0,0026 | | | |
|---|---|---|---|
| **Temps (h)** | **% conversion** | **Mn mesuré** | **Ip** |
| 1 | 0,2 | | |
| 4 | 52,6 | 10 600 | 1,4 |
| 5 | 71,2 | 14 170 | 1,3 |
| 5,5 | 85 | 15 400 | 1,3 |

TABLEAU 9

| EXEMPLE 9 (COMPARATIF) ; $C_{Benz}$ = 0,0026 | | | |
|---|---|---|---|
| **Temps (h)** | **% conversion** | **Mn mesuré** | **Ip** |
| 1 | 1,2 | | |
| 4 | | | |
| 5 | 22,6 | | |
| 5,5 | 28 | 6141 | 1,2 |
| 8,5 | 49,9 | 10950 | 1,3 |
| 11 | 63 | 13320 | 1,3 |

## Revendications

**1.** Procédé de fabrication d'un polymère ou copolymère présentant un indice de jaune mesuré selon la norme ASTM D1925 inférieur à 20, comprenant une étape de polymérisation ou copolymérisation en phase organique, en l'absence de phase aqueuse, par voie radicalaire d'au moins un monomère en présence d'un radical libre stable qui comprend le groupement $=NO^\bullet$ et d'un initiateur de formule

$$R^1\text{-O-O-}R^2,$$

dans laquelle $R^1$ et $R^2$, pouvant être identiques ou différents, représentent un radical alkyle, aryle, alkylaryle ou aralkyle, au moins un radical $R^1$ et $R^2$ comprenant un noyau aromatique.

2. Procédé selon la revendication 1, **caractérisé en ce que** l'initiateur est le peroxyde de dicumyle.

3. Procédé selon l'une des revendications précédentes, **caractérisé en ce que** l'initiateur présente une durée de demi-vie de une heure à une température comprise entre 80°C et 150°C.

4. Procédé selon l'une des revendications 1 et 2, **caractérisé en ce que** l'initiateur est introduit dans le milieu de polymérisation ou copolymérisation à raison de 50 à 50 000 ppm en poids sur la base de la masse de monomère, et **en ce que** le radical libre stable est introduit à raison de 0,005 à 5 % en poids de la somme de la masse de monomère et de radical libre stable.

5. Procédé selon l'une des revendications précédentes, **caractérisé en ce que** le radical libre stable est choisi parmi ceux ayant les formules suivantes :

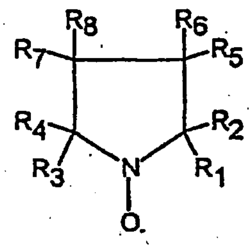 , 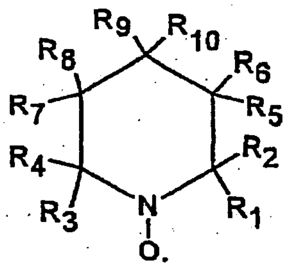 , 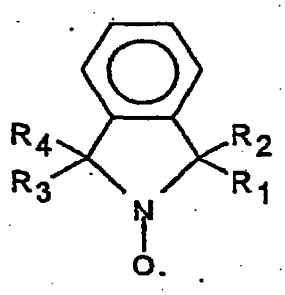 ,

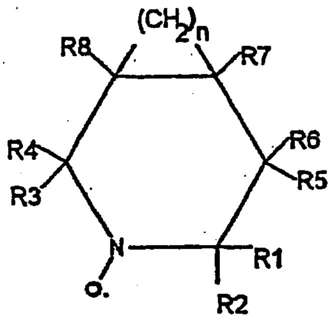 , 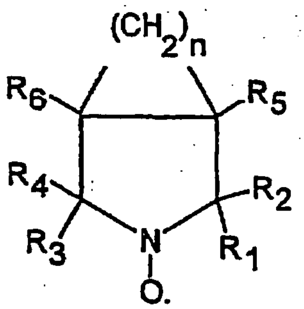 , 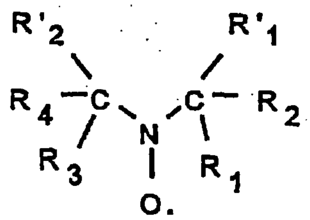

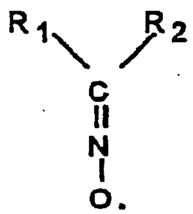 ,

dans lesquelles R1, R2, R3, R4, R'1 et R'2 pouvant être identiques ou différents représentent un atome d'halogène tel que le chlore, le brome ou l'iode, un groupement hydrocarboné linéaire, ramifié ou cyclique, saturé ou insaturé tels qu'un radical alkyle ou phényle, ou un groupement ester -COOR ou un groupement alcoxyle -OR, ou un groupement phosphonate $-PO(OR)_2$, ou une chaîne de polymère pouvant par exemple être un chaîne de polyméthacrylate de méthyle, de polybutadiène, de polyoléfine comme de polyéthylène ou de polypropylène, mais étant de

préférence une chaîne de polystyrène, et dans lesquelles R5, R6, R7, R8, R9 et R10, pouvant être identiques ou différents, peuvent être choisis dans la même famille de groupements que celle qui vient d'être envisagée pour R1, R2, R3, R4, R'1 et R'2, et de plus peuvent représenter un atome d'hydrogène, un groupement hydroxyle -OH, un groupement acide tel que -COOH ou $-PO(OH)_2$ ou $-SO_3H$,
ou est choisi dans la liste suivante :

- N-tertiobutyl-1-phényl-2 méthyl propyl nitroxyde,
- N-tertiobutyl-1-(2-naphtyl)-2-méthyl propyl nitroxyde,
- N-tertiobutyl-1-diéthylphosphono-2,2-diméthyl propyl nitroxyde,
- N-tertiobutyl-1-dibenzylphosphono-2,2-diméthyl propyl nitroxyde,
- N-phényl-1-diéthyl phosphono-2,2-diméthyl propyl nitroxyde,
- N-phényl-1-diéthyl phosphono-1-méthyl éthyl nitroxyde,
- N-(1-phényl 2-méthyl propyl)-1-diéthylphosphono-1-méthyl éthyl nitroxyde.

6. Procédé selon l'une des revendications précédentes, **caractérisé en ce que** le rapport molaire du radical libre stable sur l'initiateur est compris entre 1,5 et 2,5.

7. Procédé selon l'une des revendications précédentes, **caractérisé en ce que** la température de polymérisation ou copolymérisation va de 100°C à 130°C.

8. Procédé selon l'une des revendications précédentes, **caractérisé en ce que** le taux de conversion de monomère en polymère est supérieur à 50 %.

9. Procédé selon la revendication précédente, **caractérisé en ce que** le taux de conversion est supérieur à 60 %.

10. Procédé selon l'une des revendications précédentes, **caractérisé en ce qu'**il mène à un polymère ou copolymère de masse moléculaire moyenne en poids supérieure à 10 000.

11. Procédé selon la revendication précédente, **caractérisé en ce qu'**il mène à un polymère ou copolymère de masse moléculaire moyenne en poids allant de 100 000 à 400 000.

12. Procédé selon l'une des revendications précédentes, **caractérisé en ce que** le rapport molaire de la quantité de radical libre stable sur la quantité de monomère est supérieur à 1,2.

13. Procédé selon l'une des revendications précédentes, **caractérisé en ce qu'**il mène à un polymère ou copolymère à la polymolécularité inférieure à 1,9.

14. Procédé selon l'une des revendications précédentes, **caractérisé en ce qu'**il mène à un polymère ou copolymère à l'indice de jaune inférieur à 10.

15. Procédé selon l'une des revendications précédentes, **caractérisé en ce qu'**il mène à un polymère ou copolymère à l'indice de jaune inférieur à 5.

16. Procédé selon l'une des revendications précédentes, **caractérisé en ce qu'**il mène à un polymère ou copolymère à la polymolécularité inférieure à 1,5.

17. Procédé selon l'une des revendications précédentes, **caractérisé en ce qu'**il a lieu en masse ou en solution dans un solvant organique.

18. Procédé selon l'une des revendications précédentes, **caractérisé en ce que** au moins un monomère est vinylaromatique ou acrylique ou méthacrylique ou est un diène.

19. Procédé selon l'une des revendications précédentes, **caractérisé en ce que** tout monomère présent est choisi dans la liste suivante : monomère vinylaromatique, diène, monomère acrylique ou méthacrylique, difluorure de vinylidène, chlorure de vinyle, et lorsqu'un monomère vinylaromatique est présent, le cas échéant, l'acrylonitrile, le méthacrylonitrile, l'acide acrylique, l'acide méthacrylique, un ester d'alkyle dont le groupement alkyle contient de 1 à 4 atomes de carbone, un N-alkylmaléimide dont le groupement alkyle contient de 1 à 4 atomes de carbone, le N-phénylmaléimide.

**20.** Procédé selon la revendication précédente, **caractérisé en ce qu'**un monomère vinylaromatique est présent et **en ce que** tout monomère présent est choisi dans la liste suivante : monomère vinylaromatique, acrylonitrile, méthacrylonitrile, acide acrylique, acide méthacrylique, ester d'alkyle dont le groupement alkyle contient de 1 à 4 atomes de carbone, N-alkylmaléimide dont le groupement alkyle contient de 1 à 4 atomes de carbone, N-phénylmaléimide.

**21.** Procédé selon la revendication précédente, **caractérisé en ce que** tout monomère présent est vinylaromatique.

**Claims**

**1.** Process for the manufacture of a polymer or copolymer exhibiting a yellowing index, measured according to Standard ASTM D1925, of less than 20, comprising a stage of polymerisation or copolymerization in an organic phase, in the absence of an aqueous phase, by the radical route of at least one monomer in the presence of a stable free radical comprising the group $=N-O^{\bullet}$ and of an initiator of formula

$$R^1\text{-O-O-}R^2$$

in which $R^1$ and $R^2$, which can be identical or different, represent an alkyl, aryl, alkylaryl or aralkyl radical, at least one radical from $R^1$ and $R^2$ comprising an aromatic nucleus.

**2.** Process according to Claim 1, **characterized in that** the initiator is dicumyl peroxide.

**3.** Process according to one of the preceding claims, **characterized in that** the initiator exhibits a half life of one hour at a temperature of between 80°C and 150°C.

**4.** Process according to one of Claims 1 to 3, **characterized in that** the initiator is introduced into the polymerization or copolymerization medium in a proportion of 50 to 50 000 ppm by weight on the basis of monomer and **in that** the stable free radical is introduced in a proportion of 0.005 to 5% by weight of the sum of the mass of monomer and of stable free radical.

**5.** Process according to one of the preceding claims, **characterized in that** the stable free radical is chosen from those having the following formulae:

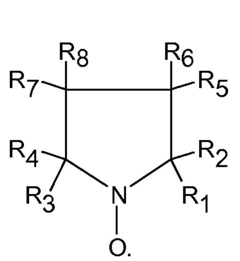
,
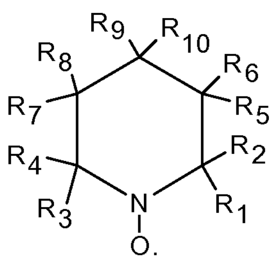
,
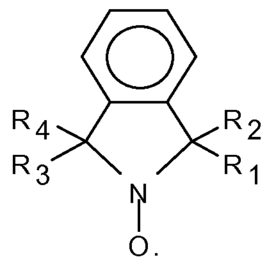
,

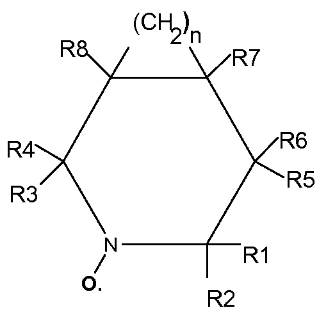
,
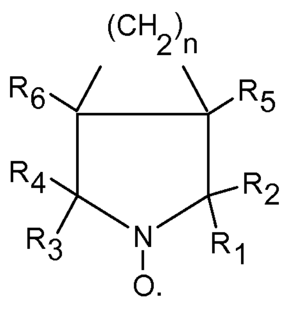
,
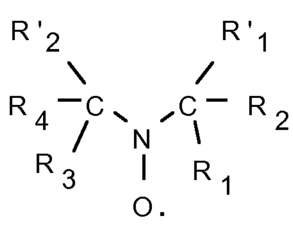

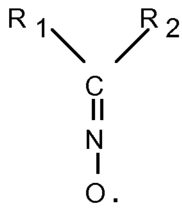

in which $R_1$, $R_2$, $R_3$, $R_4$, $R_1'$, $R_2'$, which can be identical or different, represent a halogen atom, such as chlorine, bromine or iodine, a saturated or unsaturated and linear, branched or cyclic hydrocarbonaceous group, such as an alkyl or phenyl radical, or an ester group -COOR or an alkoxy group -OR, or a phosphonate group $-PO(OR)_2$, or a polymer chain which can be, for example, a poly(methyl methacrylate chain, a polybutadiene chain or a polyolefin chain, such as a polyethylene or polypropylene chain, but which is preferably a polystryrene chain, and in which R5, $R_6$, $R_7$, $R_8$, $R_8$, $R_9$ and $R_{10}$, which can be identical or different, can be chosen from the same family of groups as that which has just been envisaged for $R_1$, $R_2$, $R_3$, $R_4$, $R_1'$, $R_2'$, and can furthermore represent a hydrogen atom, a hydroxyl group -OH or an acid group, such as -COOH or $-PO(OH)_2$ or $-SO_3H$, or is chosen from the following list:

- tert-butyl 1-phenyl-2 methylpropyl nitroxide,
- tert-butyl 1-(2-naphtyl)-2-methylpropyl nitroxide,
- tert-butyl 1-diethylphosphono-2,2-dimethylpropyl nitroxide,
- tert-butyl 1-dibenzylphosphono-2,2-dimethylpropyl nitroxide,
- phenyl 1-diethylphosphono-2,2-dimethylpropyl nitroxide,
- phenyl 1-diethylphosphono-1-methylethyl nitroxide,
- 1-phenyl-2-methylpropyl-1-diethylphosphono-1-methylethyl nitroxide.

6. Process according to one of the preceding claims, **characterized in that** the molar ratio of the stable free radical to the initiator is between 1.5 and 2.5.

7. Process according to one of the preceding claims, **characterized in that** the polymerization or copolymerization temperature ranges from 100 to 130°C.

8. Process according to one of the preceding claims, **characterized in that** the degree of conversion of monomer to polymer is greater than 50%.

9. Process according to the preceding claim, **characterized in that** the degree of conversion is greater than 60%.

10. Process according to one of the preceding claims, **characterized in that** it leads to a polymer or copolymer with a weight-average molecular mass of greater than 10 000.

11. Process according to the preceding claim, **characterized in that** it leads to a polymer or copolymer with a weight-average molecular mass ranging from 100 000 to 400 000.

12. Process according to one of the preceding claims, **characterized in that** the molar ratio of the amount of stable free radical to the amount of monomer is greater than 1.2.

13. Process according to one of the preceding claims, **characterized in that** it leads to a polymer or copolymer with a polydispersity index of less than 1.9.

14. Process according to one of the preceding claims, **characterized in that** it leads to a polymer or copolymer with a yellowing index of less than 10.

15. Process according to the preceding claim, **characterized in that** it leads to a polymer or copolymer with a yellowing index of less than 5.

16. Process according to one of the preceding claims, **characterized in that** it leads to a polymer or copolymer with a polydispersity index of less than 1.5.

**17.** Process according to one of the preceding claims, **characterized in that** it takes place in bulk or in solution in an organic solvent.

**18.** Process according to one of the preceding claims, **characterized in that** at least one monomer is vinylaromatic or acrylic or methacrylic or is a diene.

**19.** Process according to one of the preceding claims, **characterized in that** all monomers present are chosen from the following list: vinylaromatic monomer, diene, acrylic or methacrylic monomer, vinylidene difluoride, vinyl chloride and, when a vinylaromatic monomer is present, if appropriate, acrylonitrile, methacrylonitrile, acrylic acid, methacrylic acid, an alkyl ester, the alkyl group of which comprises from 1 to 4 carbon atoms, an N-alkylmaleimide, the alkyl group of which comprises from 1 to 4 carbon atoms, and N-phenylmaleimide.

**20.** Process according to the preceding claim, **characterized in that** a vinylaromatic monomer is present and **in that** all monomers present are chosen from the following list: vinylaromatic monomer, acrylonitrile, methacrylonitrile, acrylic acid, methacrylic acid, alkyl ester, the alkyl group of which comprises from 1 to 4 carbon atoms, N-alkylmaleimide, the alkyl group of which comprises from 1 to 4 carbon atoms, and N-phenylmaleimide.

**21.** Process according to the preceding claim, **characterized in that** all monomers are vinylaromatic monomers.

**Patentansprüche**

**1.** Verfahren zur Herstellung eines Polymers oder Copolymers mit einem Gelbwert (Vergilbungsindex), gemessen nach der Norm ASTM D 1925, unter 20, das einen Schritt der Polymerisation oder Copolymerisation in organischer Phase in Abwesenheit einer wässerigen Phase auf radikalischem Weg mindestens eines Monomers in Gegenwart eines stabilen freien Radikals, das die Gruppe $=N-O^{\bullet}$ aufweist, und eines Initiators der Formel

$$R^1-O-O-R^2$$

umfasst,
worin $R^1$ und $R^2$, die gleich oder verschieden sind, eine Alkylgruppe, eine Arylgruppe, eine Alkylarylgruppe oder eine Aralkylgruppe bedeuten, wobei mindestens eine der Gruppen $R^1$ und $R^2$ einen aromatischen Kern aufweist.

**2.** Verfahren nach Anspruch 1, **dadurch gekennzeichnet, dass** der Initiator Dicumylperoxid ist.

**3.** Verfahren nach einem der vorhergehenden Ansprüche, **dadurch gekennzeichnet, dass** der Initiator eine Halbwertszeit von einer Stunde bei einer Temperatur von 80 bis 150 °C aufweist.

**4.** Verfahren nach Anspruch 1 oder 2, **dadurch gekennzeichnet, dass** der Initiator in einer Menge von 50 bis 50 000 ppm, bezogen auf das Gewicht der Monomermasse, zu dem Polymerisations- oder Copolymerisationsmedium zugegeben wird und dass das stabile freie Radikal in einer Menge von 0,005 bis 5 Gew.-%, bezogen auf die Summe der Monomermasse und der Masse des stabilen freien Radikals zugegeben wird.

**5.** Verfahren nach einem der vorhergehenden Ansprüche, **dadurch gekennzeichnet, dass** das stabile freie Radikal ausgewählt ist unter Radikalen der folgenden Formeln:

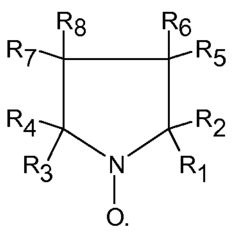 ,

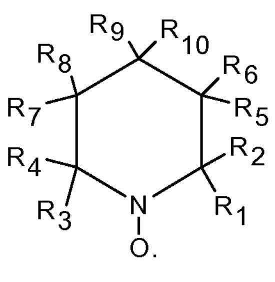 ,

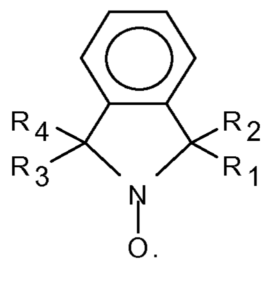 ,

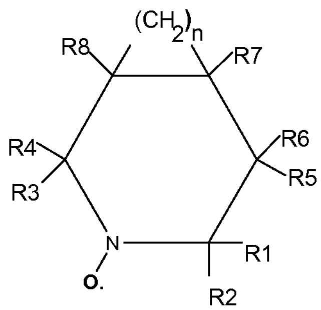,
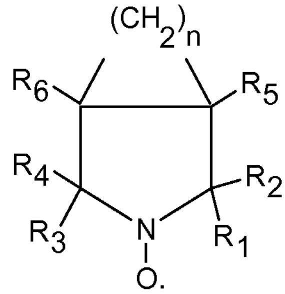,
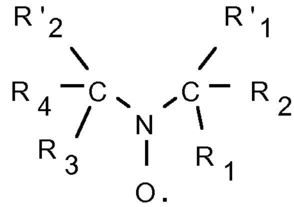

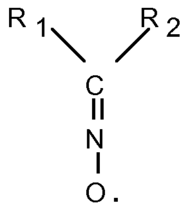

worin bedeuten:
wobei $R_1$, $R_2$, $R_3$, $R_4$, $R'_1$ und $R'_2$, die gleich oder verschieden sind, ein Halogenatom, wie Chlor, Brom oder Iod, eine gesättigte oder ungesättigte, geradkettige, verzweigte oder cyclische Kohlenwasserstoffgruppe, wie eine Alkylgruppe oder eine Phenylgruppe, oder eine Estergruppe -COOR oder eine Alkoxylgruppe -OR oder eine Phosphonatgruppe $-PO(OR)_2$ oder eine Polymerkette, die beispielsweise eine Polymethylmethacrylat-Kette, eine Polybutadien-Kette oder eine Polyolefin-Kette, wie eine Polyethylen-Kette oder eine Polypropylen-Kette, sein kann, aber vorzugsweise eine Polystyrol-Kette ist,
$R_5$, $R_6$, $R_7$, $R_8$, $R_9$ und $R_{10}$, die gleich oder verschieden sind, Gruppen, die ausgewählt sein können aus der gleichen Familie von Gruppen, wie sie in bezug auf $R_1$, $R_2$, $R_3$, $R_4$, $R'_1$ und $R'_2$ genannt wurden, sowie ferner ein Wasserstoffatom, eine Hydroxylgruppe -OH oder eine Säuregruppe wie -COOH oder $-PO(OH)_2$ oder $-SO_3H$,
oder das stabile freie Radikal ausgewählt ist aus der folgenden Liste:

- N-tert.-Butyl-1-phenyl-2-methylpropylnitroxid,
- N-tert.-Butyl-1-(2-naphthyl)-2-methylpropylnitroxid,
- N-tert.-Butyl-1-diethylphosphono-2,2-dimethylpropylnitroxid,
- N-tert.-Butyl-1-dibenzylphosphono-2,2-dimethylpropylnitroxid,
- N-Phenyl-1-diethylphosphono-2,2-dimethylpropylnitroxid,
- N-Phenyl-1-diethylphosphono-1-methylethylnitroxid,
- N-(1-Phenyl-2-methylpropyl)-1-diethylphosphono-1-methylethylnitroxid.

**6.** Verfahren nach einem der vorhergehenden Ansprüche, **dadurch gekennzeichnet, dass** das Molverhältnis von stabilem freiem Radikal zu Initiator 1,5 bis 2,6 beträgt.

**7.** Verfahren nach einem der vorhergehenden Ansprüche, **dadurch gekennzeichnet, dass** die Polymerisations- oder Copolymerisationstemperatur im Bereich von 100 bis 130 °C liegt.

**8.** Verfahren nach einem der vorhergehenden Ansprüche, **dadurch gekennzeichnet, dass** der Umsatz des Monomers zu Polymer größer als 50 % ist.

**9.** Verfahren nach dem vorhergehenden Anspruch, **dadurch gekennzeichnet, dass** der Umsatz größer als 60 % ist.

**10.** Verfahren nach einem der vorhergehenden Ansprüche, **dadurch gekennzeichnet, dass** es zu einem Polymer oder Copolymer mit einem Gewichtsmittel der Molekülmasse von mehr als 10.000 führt.

**11.** Verfahren nach dem vorhergehenden Anspruch, **dadurch gekennzeichnet, dass** es zu einem Polymer oder Copolymer mit einem Gewichtsmittel der Molekülmasse von 100.000 bis 400.000 führt.

**12.** Verfahren nach einem der Ansprüche 1 bis 14, **dadurch gekennzeichnet, dass** das Molverhältnis der Menge von stabilem freiem Radikal zur Monomermenge größer als 1,2 ist.

**13.** Verfahren nach einem der vorhergehenden Ansprüche, **dadurch gekennzeichnet, dass** es zu einem Polymer oder Copolymer mit einer Polymolekularität von weniger als 1,9 führt.

**14.** Verfahren nach einem der vorhergehenden Ansprüche, **dadurch gekennzeichnet, dass** es zu einem Polymer oder Copolymer mit einem Gelbwert (Vergilbungsindex) von weniger als 10 führt.

**15.** Verfahren nach dem vorhergehenden Anspruch, **dadurch gekennzeichnet, dass** es zu einem Polymer oder Copolymer mit einem Gelbwert (Vergilbungsindex) von weniger als 5 führt.

**16.** Verfahren nach einem der vorhergehenden Ansprüche, **dadurch gekennzeichnet, dass** es zu einem Polymer oder Copolymer mit einer Polymolekularität von weniger als 1,5 führt.

**17.** Verfahren nach einem der vorhergehenden Ansprüche, **dadurch gekennzeichnet, dass** es in Substanz oder in Lösung in einem organischen Lösemittel durchgeführt wird.

**18.** Verfahren nach einem der vorhergehenden Ansprüche, **dadurch gekennzeichnet, dass** mindestens ein Monomer vinylaromatisch oder ein Acryl-Monomer oder ein Methacryl-Monomer oder ein Dien ist.

**19.** Verfahren nach einem der vorhergehenden Ansprüche, **dadurch gekennzeichnet, dass** jedes vorhandene Monomer aus der folgenden Liste ausgewählt ist: vinylaromatisches Monomer, Dienmonomer, Acryl- oder Methacryl-Monomer, Vinylidendifluorid, Vinylchlorid, und, wenn ein vinylaromatisches Monomer vorhanden ist, gegebenenfalls Acrylnitril, Methacrylnitril, Acrylsäure, Methacrylsäure, Alkylester, dessen Alkylgruppe 1 bis 4 Kohlenstoffatome enthält, N-Alkylmaleinimid, dessen Alkylgruppe 1 bis 4 Kohlenstoffatome enthält, und N-Phenylmaleinimid.

**20.** Verfahren nach dem vorhergehenden Anspruch, **dadurch gekennzeichnet, dass** ein vinylaromatisches Monomer vorhanden ist und dass jedes vorhandene Monomer aus der folgenden Liste ausgewählt ist: vinylaromatisches Monomer, Acrylnitril, Methacrylnitril, Acrylsäure, Methacrylsäure, Alkylester mit einer Akylgruppe mit 1 bis 4 Kohlenstoffatomen, N-Alkylmaleinimid mit einer Alkylgruppe mit 1 bis 4 Kohlenstoffatomen und N-Phenylmaleinimid.

**21.** Verfahren nach dem vorhergehenden Anspruch, **dadurch gekennzeichnet, dass** jedes vorhandene Monomer vinylaromatisch ist.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 9411412 A
- US 4581429 A
- WO 9526987 A
- US 5412047 A
- US 5449724 A
- BR 9400671